# FASCICULE DE BREVET EUROPEEN

(11) **EP 3 732 096 B1**
(45) Date de publication et mention de la délivrance du brevet: **22.11.2023**
(21) Numéro de dépôt: 18833066.6
(22) Date de dépôt: 27.12.2018
(51) Int. Cl.: B63B 22/00, G01V 1/38, G10K 11/00

(54) **DISPOSITIF SOUS-MARIN DEPLOYABLE**
ENTFALTBARE UNTERWASSERVORRICHTUNG
DEPLOYABLE SUBMARINE DEVICE

(30) Priorité: 27.12.2017 FR 1701400
(43) Date de publication de la demande: 04.11.2020
(73) Titulaire: THALES, 92190 Meudon (FR)
(72) Inventeur: PREVEL, Florian, 29200 BREST (FR); KERDRAON, Philippe, 29200 BREST (FR)
(74) Mandataire: Atout PI Laplace
(86) Numéro de dépôt international: PCT/EP2018/097049
(87) Numéro de publication internationale: WO 2019/129826

(56) Documents cités:
- US-A- 3 047 259
- US-A- 3 212 110
- US-A1- 2016 221 655

## Description

Le domaine de l'invention est celui des dispositifs sous-marins déployables destinés à être déployés sous l'eau. Un dispositif conforme à l'état de la technique est connu, par exemple , du document US3047259.

L'invention se rapporte notamment aux bouées acoustiques aérolargables appelées, « sonobuoy » en terminologie anglo-saxonne. Les bouées sonars aérolargables comprennent un sonar comprenant une antenne de réception d'ondes acoustiques comprenant un corps de support, des bras articulés au corps du support et des hydrophones portés par les bras. La bouée comprend classiquement un boitier cylindrique de taille normalisée et des éléments internes initialement logés dans le boitier. Les bras sont alors dans une configuration repliée dans laquelle ils sont répartis autour d'un axe de référence du corps de support et s'étendent longitudinalement parallèlement à cet axe de référence. Les éléments internes de la bouée sortent du boitier lorsque la bouée est immergée, ce qui a pour effet de libérer les bras de la configuration repliée. Les bras se déploient alors jusqu'à une configuration déployée par éloignement d'une de leurs extrémités de l'axe de référence qui est sensiblement vertical une fois que la bouée est immergée. La bouée comprend des haubans pour assurer le déploiement des bras. Chaque hauban est relié d'une part à un bras et d'une part à une ligne de plongée entre le corps de support et un corps flottant. La ligne de plongée se tend verticalement selon l'axe de référence sous l'effet de l'immersion de la bouée et de la séparation du corps flottant, qui remonte à la surface, et du corps de support qui coule ce qui a pour effet de tendre les haubans qui viennent tirer sur les bras. Cette solution de déploiement peut s'avérer inapte à générer un couple de rotation susceptible d'engager le déploiement des bras, notamment lorsque les bras forment, avec l'axe de la ligne de plongée, un angle inférieur à l'angle formé entre les haubans et cette même ligne de plongée. Des moyens pour engager le déploiement des bras sont alors prévus sous forme de ressorts de torsion. Chaque bras est associé à un ressort de torsion qui va initier son déploiement. Un ressort de torsion comprend classiquement une partie centrale formée par une pluralité de spires enroulées autour d'un même axe d'enroulement et deux leviers rigides reliés l'un à l'autre par l'intermédiaire de la partie centrale. Les ressorts de torsion sont localement sollicités en flexion mais globalement sollicités en torsion, lorsque les bras sont maintenus dans la configuration repliée. Autrement dit, chaque ressort de torsion est soumis globalement, entre ses deux leviers, à un couple de torsion autour de l'axe d'enroulement. Lorsque les bras sortent du boitier, les bras sont libérés de la configuration repliée et les ressorts de torsion restituent l'énergie de torsion en engageant le déploiement des bras. L'un des leviers pivote par rapport au corps autour de l'axe d'enroulement.

Les ressorts sont installés au niveau des extrémités distales des bras, c'est-à-dire au niveau de leurs extrémités opposées aux articulations des bras au corps de support. Dans la configuration repliée des bras, les extrémités distales sont réparties angulairement autour de l'axe de référence. Chaque ressort de torsion est interposé entre l'axe de référence et le bras auquel il est associé et les axes d'enroulements, parallèles à l'axe de référence, sont répartis angulairement autour de l'axe de référence. Chaque ressort de torsion comprend un levier en appui sur le bras. Lorsque les bras sont libérés, le levier pivote autour de l'axe d'enroulement du ressort de torsion et en exerçant une poussée radiale à l'axe de référence sur l'extrémité distale du bras de sorte à engager son déploiement.

Cette solution présente des problèmes de fiabilité. Le déploiement des bras n'a pas toujours lieu ou peut s'avérer trop lent ou insuffisant pour que les haubans puissent prendre le relais. La bouée peut alors devenir inutilisable ou présenter des performances amoindries.

Un but de l'invention est de limiter au moins un des inconvénients précités.

A cet effet, l'invention se rapporte à un dispositif sous-marin destiné à être déployé dans l'eau, selon la revendication 1.

Avantageusement, l'invention comprend au moins une des caractéristiques ci-dessous prise seule ou en combinaison :
- le ressort de flexion est agencé de sorte à se déformer essentiellement dans un plan perpendiculaire à l'axe de référence lorsqu'il se détend,
- les bras sont répartis angulairement autour de l'axe de référence r du corps de support,
- le ressort de flexion comprend une partie d'ancrage fixe par rapport à l'axe r et une partie déformable qui se déforme lorsque le ressort de flexion se détend, la partie déformable s'étendant autour de l'axe r, lorsque les bras sont maintenus en configuration repliée, sur un secteur angulaire comprenant un secteur angulaire de référence délimité par un premier bras de l'ensemble de bras sur lequel le ressort de flexion exerce une poussée de sorte à engager son déploiement lorsqu'il se détend et par un deuxième bras, de l'ensemble de bras, adjacent au premier bras,
- la partie déformable s'étend au delà du secteur angulaire de référence, du côté du deuxième bras,
- la partie déformable s'étend au delà du secteur angulaire de référence, du côté du premier bras,
- la partie déformable comprend une extrémité libre, se trouvant au-delà du secteur S dans le sens opposé au deuxième bras en partant du premier bras,
- l'ensemble d'au moins un ressort de flexion comprend plusieurs ressorts de flexion, chaque ressort de flexion étant configuré et agencé de sorte à engager le ressort d'un unique bras,
- les ressorts de flexion se superposent lorsque les bras sont maintenus dans la configuration repliée,
- l'ensemble d'au moins un ressort de flexion est disposé à proximité de l'extrémité distale du bras,
- le dispositif comprend des moyens de maintien aptes à maintenir les bras dans la configuration repliés et à les libérer, lesdits moyens de maintien comprennent une bande de serrage flexible mise en flexion élastique pour entourer les bras de sorte à les maintenir en configuration repliée, la bande flexible étant maintenue en flexion par deux goupilles, la bande flexible étant libérée par entraînement d'une seule des deux goupilles en translation par rapport à la bande flexible selon l'axe de référence,
- le dispositif est du type bouée acoustique aérolargable,
- la poussée engageant le déploiement du bras présente une composante radiale par rapport à l'axe de référence.

L'invention sera mieux comprise à l'étude de quelques modes de réalisation décrits à titre d'exemples nullement limitatifs, et illustrés par des dessins annexés sur lesquels :
- La figure 1a représente schématiquement le largage d'une bouée aérolargable depuis un aéronef, la figure 1b représente l'immersion de la bouée aérolargable et la figure 1c représente schématiquement le début du déploiement de la bouée après son immersion,
- la figure 2 représente schématiquement des éléments internes d'une bouée déployable,
- la figure 3 représente schématiquement la bouée de la figure 2 lorsque les bras sont allongés,
- la figure 4 représente schématiquement la bouée de la figure 2 dans une configuration déployée,
- la figure 5 représente schématiquement la bouée de la figure 2 dans une configuration intermédiaire entre la figure 4 et la figure 3,
- la figure 6 représente plus précisément un exemple de bouée aérolargable déployée selon l'invention,
- la figure 7 représente schématiquement une coupe de la bouée de la figure 6 selon le plan P du corps 8 lorsque les bras sont maintenus dans la configuration repliée,
- la figure 8 représente schématiquement une coupe de la bouée de la figure 6 selon le plan P dans la configuration déployée de la figure 6,
- la figure 9 représente schématiquement une vue en perspective du corps 8 dans la configuration de la figure 6.

D'une figure à l'autre les mêmes éléments sont désignés par les mêmes références numériques.

La description qui suit est relative aux bouées acoustiques aérolargables. L'invention s'applique également à tout dispositif sous-marin déployable comprenant une pluralité de bras répartis autour d'un axe de référence r d'un corps de support et articulés, au niveau de leur extrémité proximale, au corps de support de sorte à être aptes à être dans une configuration repliée et dans une configuration déployée, chaque bras passant de la configuration repliée à la configuration déployée par éloignement d'une extrémité distale du bras de l'axe de référence. L'invention s'applique aussi, par exemple, aux ancres flottantes du type comprenant des bras déployables entre lesquels une toile peut être tendue ou aux ancres de type grappins comprenant également des bras déployables du type crocs d'ancrage.

Les bras peuvent s'étendre radialement autour de l'axe de référence r dans la configuration déployée. A cet effet, chaque bras peut être relié au corps de support par une liaison pivot d'axe tangentiel à l'axe de référence r. Autrement dit, les projections des bras respectifs dans un plan perpendiculaire à l'axe r s'étendent selon des axes radiaux respectifs définis par rapport à cet axe.

En variante, les bras ne s'étendent pas radialement par rapport à l'axe de référence r du corps de support dans la configuration déployée. Ils peuvent alors, par exemple, être reliés au corps de support par une liaison pivot d'axe non tangentiel à l'axe de référence r. Avantageusement, les bras sont inclinés par rapport à l'axe de référence r dans la configuration déployée.

Avantageusement, les bras sont régulièrement répartis autour de l'axe de référence. Autrement dit, l'angle du secteur angulaire formé autour de l'axe de référence et délimité par deux bras adjacents est le même pour tous les couples de bras adjacents. En variante, les angles d'au moins deux secteurs délimités par deux bras adjacents sont différents.

Les bras peuvent présenter une longueur fixe ou être extensibles, par exemple télescopiques. Les bras présentent alors une configuration rangée dans laquelle ils sont dans une configuration repliée. Ils passent de la configuration rangée à la configuration déployée par allongement des bras et par passage de la configuration repliée à la configuration déployée.

Le dispositif sous-marin peut comprendre une ligne de plongée reliée au corps de support, la ligne de plongée s'étendant sensiblement selon l'axe de référence r et sensiblement vertical dès le début du déploiement des bras.

Le dispositif comprend des moyens de déploiement permettant de déplacer les bras vers leur configuration déployée. Ces moyens de déploiement peuvent comprendre des lignes de déploiement du type hauban. Chaque hauban est relié, d'une part, à un des bras et, d'autre part, à une ligne de plongée reliant le corps de support à un flotteur de sorte que sous l'effet de l'immersion du dispositif, le flotteur et le corps de support s'éloignent l'un de l'autre entraînant un déploiement de la ligne de plongée qui vient se tendre, s'étendre verticalement selon l'axe de référence et tendre les haubans qui viennent tirer sur les bras.

En variante, des flotteurs sont par exemple fixés aux extrémités distales des bras, de sorte que lorsque les bras sont libérés, les flotteurs assurent le déploiement des bras. En variante, des ressorts de torsion peuvent être installés au niveau des articulations des bras au corps de support. L'axe d'enroulement de chaque ressort de torsion s'étend selon l'axe de la liaison pivot reliant le bras au corps de support.

Le dispositif sous-marin peut être configuré de sorte que les bras passent automatiquement de la configuration rangée à la configuration déployée lors de l'immersion du dispositif sous-marin ou peut être configuré pour déployer les bras sur commande.

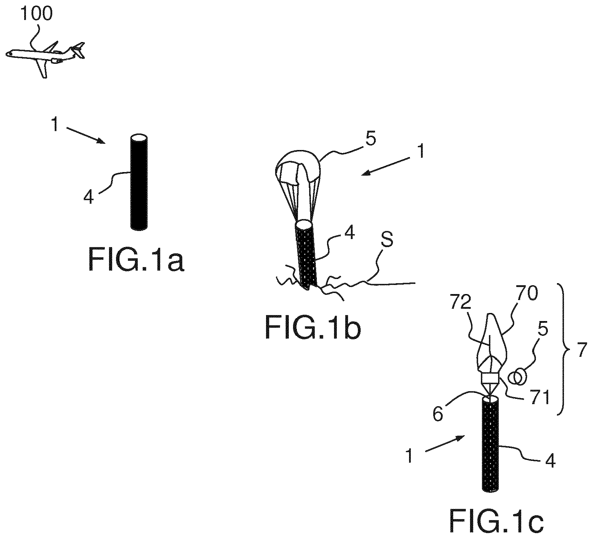

La figure 1a représente un aéronef A larguant une bouée acoustique 1 aérolargable selon l'invention dans un environnement marin dans le but de détecter des ondes acoustiques correspondant à des ondes acoustiques émises ou réfléchies (échos) par des cibles potentielles 3. La bouée 1 pourrait en variante être larguée depuis un bâtiment de surface, par exemple depuis une plate-forme ou un véhicule sous-marin. Sur la figure 1a, la bouée 1 est dans une configuration initiale de rangement dans laquelle ses éléments internes sont logés dans un boîtier 4. Lorsque la bouée acoustique 1 est larguée, un parachute 5 de la bouée est automatiquement déployé pour ralentir sa chute comme visible sur la figure 1b.

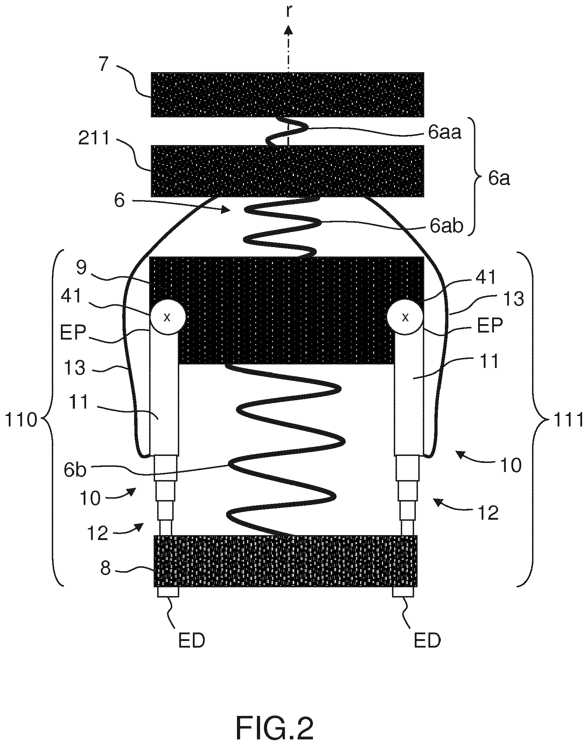

La figure 2 représente schématiquement les éléments internes de la bouée tels qu'ils sont disposés à l'intérieur du boîtier 4 lorsque la bouée est dans la configuration de rangement.

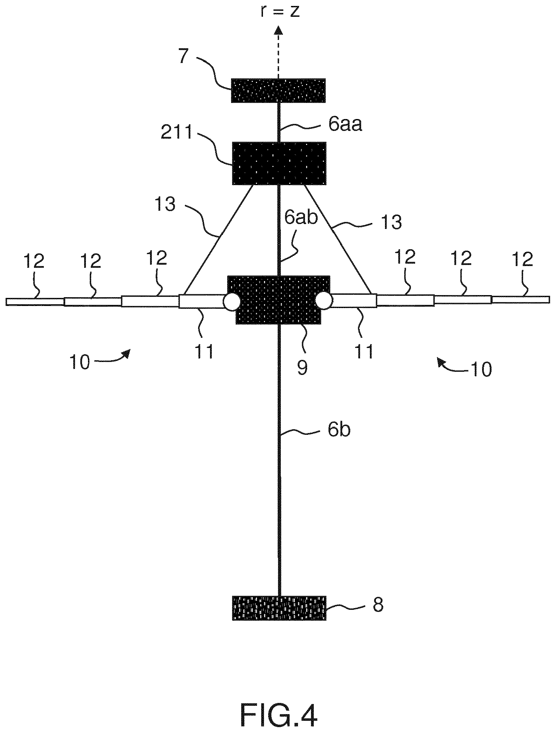

La bouée 1 comprend un corps flottant 7 initialement logé dans le boîtier 4 dans une configuration rangée de la bouée, représentée sur la figure 2 sans le boitier. Le corps flottant 7 est configuré pour remonter à la surface de l'eau et flotter à la surface de l'eau lorsque la bouée 1 est plongée dans l'eau, c'est-à-dire lors du déploiement de la bouée vers une configuration déployée représentée sur la figure 4 qui sera décrite ultérieurement.

La bouée 1 comprend un sonar 110 à flottabilité négative. Ce sonar 110 est relié au corps flottant 7 par une première portion 6a d'une ligne de plongée 6. La première portion comprend deux sous-portions 6aa, 6ab. La première portion 6a relie le corps flottant 7 au sonar 110 via un corps intermédiaire 211. Une autre portion 6b de la ligne de plongée relie le corps 9 au corps 8.

Le sonar 110 comprend une antenne de réception 111 comprenant le corps de support 9, un ensemble de bras 10 portant des capteurs acoustiques non représentés sur la figure 2 sur laquelle on a représenté schématiquement l'ensemble de bras par deux bras diamétralement opposés pour plus de clarté.

Les portions 6a et 6b sont initialement repliées.

Dans l'exemple de la figure 2, l'antenne de réception 111 comprend un autre corps 8 relié au corps 9 par une deuxième portion 6b de la ligne de plongée 6, le corps 8 étant relié au corps flottant 7 par l'intermédiaire du corps 9. En variante, le corps 8 est fixe par rapport au corps 9. Ils peuvent être monoblocs.

L'antenne de réception 111 est déployable. Autrement dit, elle est apte à passer d'une configuration rangée de la figure 2 à une configuration déployée de la figure 4 de sorte que chacun des bras passe aussi d'une configuration rangée, dans laquelle les bras sont dans une configuration repliée, à une configuration déployée.

Les bras 10 sont répartis angulairement autour d'un axe de référence r du corps de support 9, c'est-à-dire autour d'un axe r fixe par rapport au corps 10. Les bras 10 sont articulés au corps de support 9 de sorte à pouvoir passer de la configuration d'une configuration repliée à la configuration déployée par éloignement des bras de l'axe r. Plus précisément, chaque bras 10 s'étend longitudinalement depuis une extrémité proximale EP articulée au corps 9 jusqu'à une extrémité distale ED qui s'éloigne de l'axe r lors du déploiement du bras 10.

Sur la réalisation des figures, les bras 10 passent de la configuration repliée à la configuration déployée par pivotement par rapport au corps de support 9. Les bras 10 sont reliés au corps de support 9 par une liaison pivot 41. L'axe de chaque liaison pivot 41 est tangentiel à l'axe de référence r. Autrement dit, il est tangent à un cercle centré sur l'axe de référence r et perpendiculaire à l'axe r. Les bras s'étendent radialement dans la configuration déployée.

Les bras 10 sont maintenus dans la configuration rangée lorsque la bouée 1 est dans la configuration rangée représentée sur la figure 2.

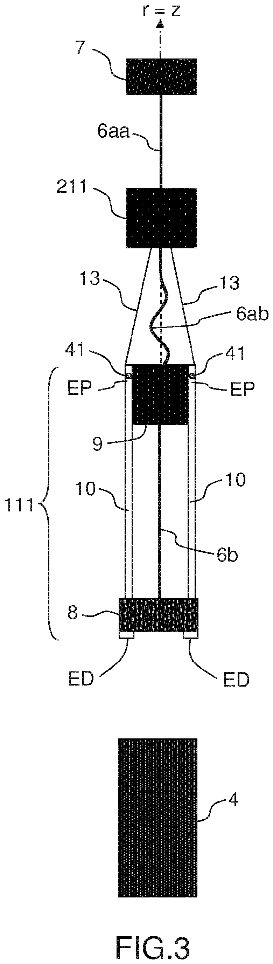

Dans le mode de réalisation particulier des figures, les bras 10 sont télescopiques. Chaque bras 10 comprend un premier segment 11 relié au corps 9 et un ensemble d'au moins un autre segment 12 relié de façon télescopique au premier segment 11 de façon que le bras 10 puisse s'allonger. Les bras 10 sont aptes à passer de la configuration rangée de la figure 2, dans laquelle les bras sont dans la configuration repliée, à la configuration déployée de la figure 4 par allongement des bras 10 et rotation des bras 10 par rapport au corps 9. Les bras 10 passent par une configuration dite allongée représentée sur la figure 3 dans laquelle ils sont plus longs que sur la figure 2 et dans laquelle ils sont toujours dans la configuration repliée.

Comme visible sur les figures 2 à 4, la bouée 1 comprend un hauban 13 par bras 10. Chaque hauban 13 est relié d'une part à un corps d'attache 211 entre le corps de support 9 et le corps flottant 7 et d'autre part à un des bras 10, à distance de l'articulation entre le corps 9 et le bras 10.

Les haubans 13 sont configurés et agencés de façon à permettre de faire pivoter les bras 10 par rapport au corps 9 vers la configuration déployée.

Comme visible sur la figure 1c, le corps flottant 7 comprend un sac gonflable 70 qui sort du boîtier 4 et est gonflé par un gaz initialement comprimé logé dans la bouée, lorsque la bouée 1 plonge dans l'eau, de sorte que le corps flottant 7 présente une flottabilité positive le faisant remonter jusqu'à la surface de l'eau 7 et reste flotter au niveau de cette surface S lors du déploiement de la bouée. Le corps flottant 7 comprend un émetteur et/ou un récepteur 72 d'ondes radioélectriques permettant une communication à distance et sans fil entre la bouée 1 et un récepteur et/ou un émetteur distant ainsi qu'un boîtier 71 pouvant par exemple loger des équipements électroniques.

Alors que le corps flottant 7 remonte vers la surface, le sonar 110 coule, tout comme le boîtier 4. L'extrémité distale ED de chaque bras 10 est initialement couplée mécaniquement au corps 8 de sorte que les bras 10 s'allongent lorsque le corps 9 s'éloigne du corps flottant 7 jusqu'à la configuration allongée de la figure 3.

La plongée du corps 9 est arrêtée par la portion 6a de la ligne de plongée qui se tend lorsque le corps flottant 7 vient flotter à la surface de l'eau. La plongée du corps 8 est arrêtée lorsque les bras sont dans leur configuration allongée. Le boîtier 4 continue de plonger et vient donc libérer les bras 10 de leur configuration repliée.

La plongée du corps 8 alors que le corps 7 remonte à la surface de l'eau a entraîné une augmentation de la distance verticale séparant le corps d'attache 211 des bras 10, les haubans 13 se sont tendus et viennent alors tirer sur les bras 10 vers le haut en éloignant les extrémités distales ED des bras 10 du corps 9 et plus particulièrement de l'axe de référence r jusqu'à la configuration déployée de la figure 4.

Les bras 10 viennent alors s'étendre radialement par rapport à l'axe de référence r du corps 9 dans la réalisation particulière des figures. Autrement dit, les projections des bras respectifs dans un plan perpendiculaire à l'axe r s'étendent selon des axes radiaux respectifs définis par rapport à cet axe.

Dans le cas non limitatif des figures, la bouée est configurée de sorte que l'axe r soit sensiblement vertical (parallèle à l'axe z) lors du passage des bras de la configuration repliée à la configuration déployée. L'axe r est l'axe longitudinal de la ligne de plongée 6 qui est tendue selon un axe sensiblement vertical sous l'effet des différences de flottabilité entre le corps de la bouée.

Sur la réalisation des figures, les bras 10 se déploient vers le haut. En variante, les bras se déploient vers le bas.

Dans la réalisation particulière des figures, les bras 10 s'étendent dans un plan perpendiculaire à l'axe r du corps dans la configuration déployée. En variante, les bras sont inclinés par rapport au plan perpendiculaire à l'axe r dans la configuration déployée.

L'engagement du déploiement des bras par les haubans 13 peut s'avérer difficile voir impossible, notamment dans le cas où les bras 10 s'étendent longitudinalement sensiblement parallèlement à l'axe r du corps de support 9 dans la configuration repliée et, plus généralement dans le cas où les bras forment, avec l'axe r, un angle supérieur à un angle formé par les haubans avec l'axe r lorsqu'il est vertical.

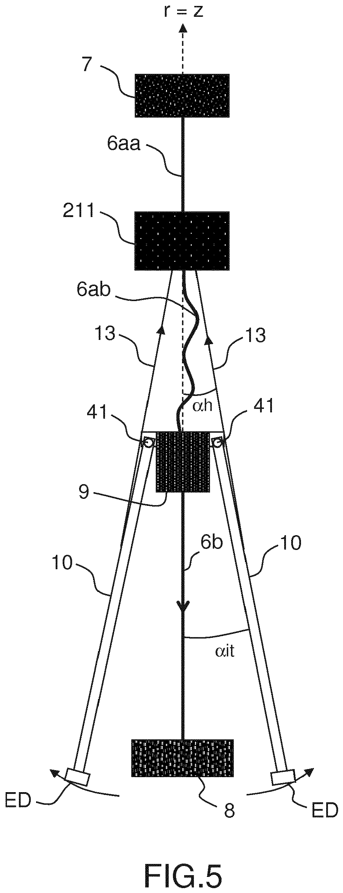

Le dispositif selon l'invention comprend des moyens d'engagement du déploiement des bras 10 configurés pour engager, c'est-à-dire débuter, le déploiement des bras depuis leurs configurations repliées respectives. Autrement dit, ces moyens d'engagement du déploiement sont configurés pour déployer les bras 10, à partir de leur configuration repliée, jusqu'à une configuration intermédiaire représentée sur la figure 5, dans laquelle les bras forment, avec l'axe r du corps 9, un angle intermédiaire αit plus important que l'angle αh formé entre les haubans 13 et l'axe r du corps 9. Ce dispositif a pour effet de fiabiliser et de faciliter voire de permettre le déploiement ultérieur des bras 10 par les haubans 13 depuis l'angle αit jusqu'à la configuration déployée.

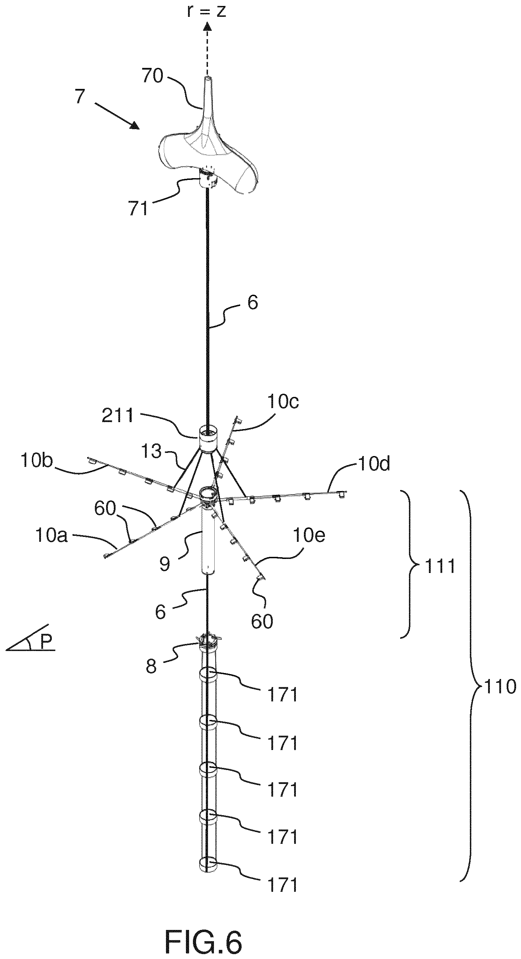

Sur la figure 6, on a représenté, en perspective, un exemple particulier de réalisation d'une bouée selon l'invention comprenant cinq bras 10a, 10b, 10c, 10d, 10e régulièrement répartis autour de l'axe z.

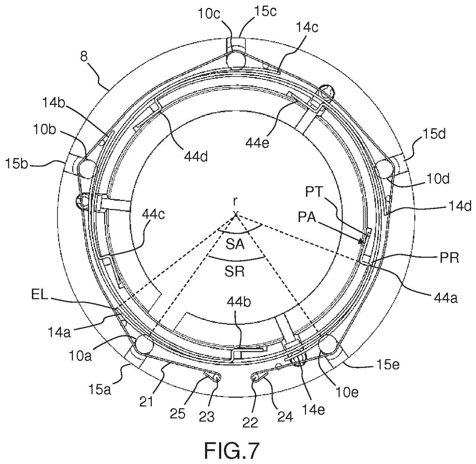

La figure 7 représente schématiquement, en coupe, la bouée 1 de la figure 6, selon le plan P, lorsque les bras sont maintenus dans la configuration repliée, c'est-à-dire avant leur déploiement.

Dans la réalisation non limitative de la figure 7, chaque bras 10a, 10b, 10c, 10d, 10e, est initialement logé, dans la configuration rangée, dans un logement 15a, 15b, 15c, 15d, 15e ménagé dans le corps 8. Ces logements 15a, 15b, 15c, 15d, 15e sont ouverts radialement de façon à permettre aux bras de se déployer.

Les moyens d'engagement du déploiement selon l'invention comprennent une pluralité de ressorts de flexion 14a, 14b, 14c, 14d, 14e ou éléments élastiques en flexion.

Lorsque les bras 10a, 10b, 10c, 10d, 10e sont maintenus dans la position repliée, les ressorts de flexion 14a, 14b, 14c, 14d, 14e sont sollicités élastiquement en flexion. Autrement dit, les ressorts de flexion 14a, 14b, 14c, 14d, 14e sont soumis à une sollicitation globale en flexion, c'est-à-dire à une sollicitation en flexion à l'échelle globale. Ils subissent un effort global de flexion.

Les ressorts de flexion 14a, 14b, 14c, 14d, 14e sont configurés et agencés de sorte que lorsqu'ils sont libérés, ils se détendent en exerçant chacun sur un des bras, une poussée radiale par rapport à l'axe de référence, c'est-à-dire une poussée présentant une composante radiale appelée poussée radiale. Cette poussée radiale engage le déploiement du bras considéré. Lorsque les bras 10a, 10b, 10c, 10d, 10e sont libérés, les ressorts de flexion 14a, 14b, 14c, 14d, 14e se détendent pour revenir à leur position de repos, c'est-à-dire à leur position libre, et restituent l'énergie de flexion en engageant, c'est-à-dire en débutant, le déploiement des bras depuis la configuration repliée. Les ressorts de flexion travaillent globalement en flexion pour revenir à leur de repos. La poussée radiale exercée par les ressorts de flexion sur les bras génère un couple de rotation des bras au niveau de leurs axes de rotation respectifs par rapport au corps de support 9 faisant pivoter les bras. Chaque ressort de flexion est configuré et agencé pour engager le déploiement d'un seul bras, les différents ressorts engageant le déploiement de bras différents.

Dans la réalisation non limitative des figures, les ressorts de flexion 14a, 14b, 14c, 14d, 14e sont initialement en appui sur les bras 10a, 10b, 10c, 10d, 10e et exercent une poussée radiale sur ces différents bras 10a, 10b, 10c, 10d, 10e.

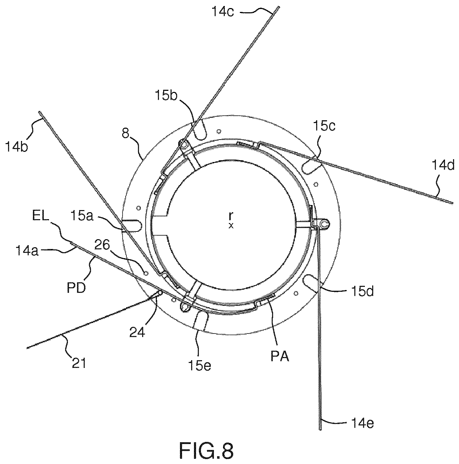

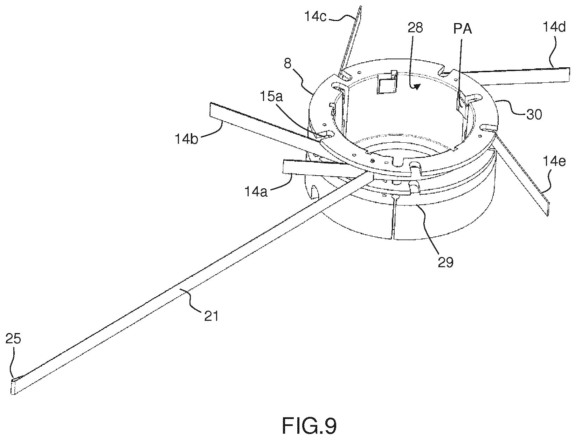

Les ressorts 14a, 14b, 14c, 14d 14e sont représentés dans la configuration détendue sur la figure 8 représentant schématiquement une coupe de la bouée 1 de la figure 6 dans le plan P. La figure 9 représente une vue en perspective du corps 8 de la figure 6.

Lors du déploiement des bras de la configuration repliée à la configuration déployée, le ressort de flexion 14a, 14b, 14c, 14d ou 14e exerce une poussée radiale sur un bras des 10a, 10b, 10c, 10d ou respectivement 10e permettant au bras d'atteindre une configuration intermédiaire, telle que représentée sur la figure 5, soit en restant en appui sur le bras jusqu'à sa configuration intermédiaire ou en quittant l'appui sur le bras avant qu'il n'atteigne la configuration intermédiaire mais en lui conférant une énergie suffisante pour que le bras atteigne la configuration intermédiaire. Lorsque le bras 10 est dans la configuration intermédiaire, le hauban attaché à ce bras est apte à le tirer jusqu'à sa configuration déployée.

Les ressorts 14a, 14b, 14c, 14d ou 14e sont avantageusement configurés et agencés de sorte à faire sortir les bras respectifs 10a, 10b, 10c, 10d et 10e de leurs logements respectifs 15a, 15b, 15c, 15d et 15e.

L'utilisation de ressorts de flexion travaillant globalement en flexion permet de fiabiliser et faciliter le déploiement ultérieur des bras par les haubans. En effet, l'énergie libérée par les ressorts de torsion est très élevée au départ mais diminue très rapidement. Or, dans le milieu marin, la dissipation d'énergie est très importante ce qui entraîne un freinage très rapide du ressort pouvant conduire à un déploiement des bras insuffisant pour que les haubans puissent prendre le relais. La libération de l'énergie par les ressorts de flexion est plus constante ce qui permet de conférer une vitesse plus importante aux bras dans le milieu marin de sorte que les bras continuent de se déployer même une fois qu'ils ne sont plus accompagnés par le ressort avant même l'intervention des haubans.

Les ressorts de flexion sont en outre peu volumineux et en particulier beaucoup moins volumineux qu'un ressort de torsion qui comprend un enroulement de spires autour d'un axe d'enroulement. Cet avantage est capital dans le domaine des bouées puisque les éléments internes de la bouée doivent initialement être contenus dans le volume très restreint délimité par le boîtier 4. Pour rappel, les éléments internes doivent classiquement être rangés dans un boîtier de longueur et de diamètre normalisés. Une bouée de taille A doit être initialement logée dans un boitier de 4, 875 inchs ou pouces de diamètre et 36 inchs ou pouces de hauteur, un inch ou pouce faisant 2, 54 cm.

Par ailleurs, les ressorts de flexion sont moins chers que les ressorts de torsion ce qui est extrêmement important dans le domaine des bouées acoustiques qui sont à usage unique. Par ailleurs l'utilisation de ressorts de flexion implique l'utilisation d'un nombre restreint de pièces puisqu'il n'est pas nécessaire de prévoir un axe par ressort ni de moyens de fixation d'un axe d'enroulement au corps 8.

Dans la réalisation particulière des figures, les ressorts de flexion sont des lames ressort mais elles pourraient en variante être réalisées sous formes de fils, c'est-à-dire de ressorts de flexion à section circulaire.

Les ressorts de flexion sont répartis autour de l'axe r.

Sur la réalisation non limitative des figures, les ressorts de flexion 14a, 14b, 14c, 14d 14e sont fixés sur le corps 8 mais pourraient en variante être fixés ailleurs, par exemple sur le corps 9. Les ressorts de flexion comprennent chacun une zone d'ancrage PA fixée au corps 8 et une partie déformable PD qui est fixe par rapport au corps 8 lorsque le bras sont maintenus dans la configuration repliée et qui se déforme élastiquement lorsque le ressort se détend. La partie déformable PD est en appui sur le corps 8, lorsque les bras sont en configuration repliée. Ces parties ne sont référencées que sur un des ressorts 14a pour plus de clarté, les ressorts étant identiques sur l'exemple non limitatif des figures. La suite de la description est faite en référence au ressort 14a et au bras 10a qu'il déploie. Chaque autre ressort 14b, 14c, 14d, 14e présente la même fonction à l'égard du bras dont la référence porte la même lettre que le ressort (10b pour le ressort 14b ; 10c pour 14c etc...) et présente les mêmes caractéristiques que le ressort 14a. Chacun des autres ressorts 14b, 14c, 14d, 14e présente également le même agencement par rapport au ressort portant la même lettre que le ressort (10b pour 14b ; 10c pour 14c etc....) et par rapport aux bras adjacents à ce bras lorsque l'on tourne autour de l'axe z.

Avantageusement, les ressorts de flexion 14a, 14b, 14c, 14d, 14e subissent chacun une flexion essentiellement dans un plan perpendiculaire à l'axe r de référence. Chacun de ces ressorts de flexion se trouve alors sensiblement dans le plan perpendiculaire à l'axe r et se détend dans ce plan lorsque l'effort de flexion exercée sur le ressort diminue. Cela permet d'assurer une compacité du dispositif de déploiement, l'amplitude angulaire du déploiement étant plus réduite en faisant travailler les ressorts en flexion dans le plan perpendiculaire à l'axe r que parallèlement à l'axe z.

Chaque ressort de flexion 14a est disposé, dans la configuration rangée, entre au moins un des bras 10a et l'axe r.

Chaque ressort est en flexion autour de l'axe r, c'est-à-dire enroulé autour de l'axe r sous l'effet de l'effort de flexion et se détend, c'est à dire se déroule lors de son extension lorsque les bras sont libérés de leurs configurations repliées respectives. Autrement dit, un rayon de courbure de la partie déformable PD augmente lors de l'extension du ressort. Ainsi, les ressorts de flexion sont susceptibles d'accompagner les bras, c'est-à-dire d'être en appui sur les bras, sur une course radiale plus longue qu'un ressort de torsion qui comprendrait un levier occupant un secteur radial de même ouverture que le ressort de flexion autour de l'axe z puisque le levier ne se déformerait pas lors du déploiement du ressort de flexion.

Lorsque les bras sont maintenus dans la configuration repliée, la partie déformable PD est en appui sur toute sa longueur sur une surface courbe du corps 8, courbée autour de l'axe r. La partie déformable PD suit la courbe de la surface courbe autour de l'axe r.

Sur la réalisation non limitative, la surface courbe 8 présente une courbure circulaire dans un plan perpendiculaire à l'axe r. En variante, la surface courbe 8 pourrait présenter une autre courbure autour de l'axe de référence r. Elle peut notamment présenter une courbure variable dans un plan perpendiculaire à l'axe r.

Le point d'appui de la partie déformable PD d'un ressort de flexion 14a, 14b, 14c, 14d, 14e sur le corps 8 s'éloigne de l'extrémité ED lors du déploiement du ressort de flexion.

Dans l'exemple non limitatif des figures 4 et 5, la partie déformable PD de chaque ressort de flexion présente initialement un rayon de courbure maximal sensiblement égal au rayon de courbure minimal d'un arc de cercle reliant les deux bras adjacents. Au repos, chaque ressort présente, dans le plan perpendiculaire à l'axe z, une partie sensiblement droite s'étendant depuis l'extrémité libre jusqu'à une partie courbe reliée à la partie d'ancrage.

Cette caractéristique permet d'éviter que le ressort 14a déployant un des bras 10b ne vienne perturber le déploiement de l'autre bras. Autrement dit, de façon plus générale, chaque ressort 14a est configuré de façon à rester distant des bras voisins du bras 10b lors de son déploiement.

Avantageusement, la partie déformable PD de chaque ressort, par exemple le ressort 14a, est interposée entre l'axe r et au moins entre deux bras adjacents, 10a, 10e pour le ressort 14a, à savoir un premier bras 10a dont il engage le déploiement et un deuxième bras, ici le bras 10e, qui est un des deux bras 10b, 10e adjacents au premier bras 10a. Autrement dit, la partie déformable PD du ressort de flexion 14a, s'étend autour de l'axe r, lorsque les bras 10 sont maintenus dans la configuration repliée, sur un secteur angulaire SA comprenant au moins deux bras 10a, 10e. Autrement dit, le ressort de flexion 14a occupe, autour de l'axe r, un secteur angulaire SA présentant une ouverture supérieure ou égale au secteur angulaire SR délimité par le bras 10a dont le déploiement est engagé par le ressort 14a et un deuxième bras 10e adjacent au premier bras 10a. De cette façon, le ressort de flexion 14a permet d'accompagner le premier bras 10a sur une course radiale importante et/ou de lui impulser une vitesse importante. Cette configuration est rendue possible par l'utilisation d'un ressort de flexion qui occupe un espace restreint car elle nécessite la superposition des ressorts adjacents entre les bras et l'axe r dans le cas où les ressorts occupent un même plan perpendiculaire à l'axe r. L'enroulement de spires d'un ressort de torsion rendrait difficile la superposition de deux ressorts. L'épaisseur e de la couronne, dont l'axe est l'axe r de référence, pouvant être occupée par les ressorts est très limitée dans le cas des bouées où les éléments de la bouée doivent occuper un boîtier de volume normalisé.

Sur la réalisation particulière des figures, la partie déformable PD de chaque ressort de flexion 14a présente une longueur supérieure à un arc de cercle centré sur l'axe z et reliant les deux bras 10a et 10e entre lesquels le ressort 14a s'étend.

Avantageusement, la partie déformable PD du ressort de flexion 14a s'étend au-delà du secteur SR du côté du deuxième bras 10e. Autrement dit, la partie déformable PD dépasse du secteur SR au-delà du deuxième bras 10e. Cela permet de conférer une vitesse importante au bras 10a. En effet, plus le point d'ancrage PA du ressort de flexion 14a est éloigné du bras 10a et plus la vitesse d'éjection du bras 10a est élevée. Ainsi, lorsque les bras 10a sont repliés, les parties déformables PD des ressorts de flexion 14 déployant les bras adjacents se superposent dans le cas où les ressort s'étendant dans un même plan perpendiculaire à l'axe r. Autrement dit, plusieurs ressorts 14a, 14e sont interposés entre le bras 10e et l'axe r.

Avantageusement, le ressort de flexion 14a est configuré et agencé de sorte à se trouver, lorsqu'il est au repos, au-delà de l'axe radial R sur lequel se trouve le bras 10a par rapport à sa partie d'ancrage PA. Cela permet de s'assurer que le ressort exerce une poussée radiale significative sur le bras tant qu'il se trouve sur l'axe radial (le déploiement n'étant pas arrêté alors que son extrémité libre EL se trouve sur l'axe radial). Par ailleurs, le déploiement du ressort de flexion est utile toute la durée du déploiement puisqu'il ne quitte pas l'axe radial avant d'atteindre sa position de repos.

Avantageusement, lorsque les bras 10a sont maintenus dans la configuration repliée, l'extrémité libre EL de la partie déformable PD du ressort 14a, se trouve au-delà du secteur SR du côté du premier bras 10a. Autrement dit, l'extrémité libre EL, dépasse du secteur SR du côté du premier bras 10a. Cette configuration est rendue possible par l'utilisation d'un ressort de flexion qui présente un volume limité car elle implique, lorsque les bras sont repliés, une superposition entre le ressort 14a et le ressort 14b qui déploie un troisième bras 14b adjacent au premier bras 14c de l'autre côté du deuxième bras 14e.

Dans la réalisation avantageuse des figures, la partie déformable PD comprend deux parties dont chacune est superposée aux parties mobiles de deux ressorts adjacents dans lorsque les bras sont dans leurs configurations repliées respectives.

Dans l'exemple non limitatif des figures, les ressorts de flexion 14a, 14b, 14c, 14d 14e sont disposés à proximité de l'extrémité distale ED des bras 10. Cela permet de limiter les risques de déformation des bras par rapport à une configuration, telle que divulguée dans la demande de brevet WO2010025494, dans laquelle des ressorts de torsion dont les spires sont enroulées autour de l'axe de la liaison pivot de chaque bras, sont prévus pour initier le déploiement des bras. En effet, les ressorts disposés au niveau de l'articulation des bras génèrent, sur les bras, des efforts radiaux antagonistes à ceux qui sont exercés par le boîtier 4 à proximité de ces articulations lorsque le boîtier coule. La disposition des ressorts à proximité des extrémités distales des bras permet de limiter les risques de déformation des bras et donc les risques de coincements des bras dans le boîtier rendant la bouée inopérante ainsi que les risques de réduction des performances de la bouée due à des pertes de certains capteurs lors de leur extraction du boîtier ou à une disposition erronée des capteurs. Par ailleurs, cette solution, proche des extrémités distales des bras, nécessite un effort de flexion moins important pour assurer le déploiement des bras et permet de faciliter l'éjection des bras de leurs logements.

En variante, les ressorts de flexion 14a, 14b, 14c, 14d 14e sont disposés à proximité de l'extrémité proximale EP, c'est-à-dire à proximité des articulations des bras au corps de support 9. Cette solution permet de conférer une vitesse importante aux bras et de les accompagner jusqu'à un angle ouverture important mais nécessite un effort de flexion important qui est défavorable à la compacité du dispositif.

En variante, une partie des ressorts est disposée à proximité de l'extrémité distale et une autre partie des ressorts à proximité de l'extrémité proximale. De façon générale, les ressorts de flexion peuvent être disposés à n'importe quel niveau des bras entre l'articulation et l'extrémité distale des bras.

Comme visible sur la figure 7, la bouée 1 comprend des moyens de maintien 20 configurés pour maintenir les bras 10a, 10b, 10c, 10d, 10e repliés lorsque le boîtier 4 recouvre les bras 10a, 10b, 10c, 10d, 10e et pour libérer les bras 10a, 10b, 10c, 10d, 10e lorsque le boîtier 4 ne recouvre plus les bras 10a, 10b, 10c, 10d, 10e. Ces moyens comprennent une bande de serrage flexible 21 qui est mise en flexion élastique pour entourer les bras 4 de sorte à les maintenir repliés ce qui assure aussi le maintien des ressorts de flexion 14a, 14b, 14c, 14d 14e en flexion. Comme la bande de serrage 21 entoure les bras 10a, 10b, 10c, 10d, 10e, les ressorts de flexion 14a, 14b, 14c, 14d 14e sont en appui sur les bras respectifs et exercent une poussée radiale sur ces bras respectifs mais la bande de flexion empêche le déplacement des bras.

La bande de serrage 21 entoure également avantageusement les ressorts de flexion 14a, 14b, 14c, 14d 14e ce qui permet de limiter les problèmes de déformation des bras. En variante, la bande de flexion est décalée par rapport aux ressorts de flexion selon l'axe r.

La bande flexible 21 est maintenue en flexion par deux goupilles 22, 23. Les goupilles 22, 23 sont initialement insérées dans des ouvertures 24, 25 formées au niveau des deux extrémités longitudinales de la bande de serrage.

La goupille 22 est fixe par rapport au corps 8 et la goupille 23, emmanchée dans un conduit 26 ménagé dans le corps 8, est initialement maintenue en place dans ce conduit 26 par frottement. Le conduit 26 est visible sur la figure 8. La goupille 23 sort de l'ouverture 25, lors de l'immersion de la bouée, lorsque le boitier 4 ne recouvre plus les bras, de sorte à libérer la bande de serrage 21 libérant ainsi les bras 10 de leur configuration repliée et les ressorts de flexion 14. Par exemple, la goupille 23 est couplée au boitier 4 par un fil qui se déplie lorsque le boitier 4 coule en s'éloignant du corps 8. De cette façon, lorsque le boitier 4 coule alors que le corps 8 est retenu par le corps flottant 7, le fil reliant la goupille23 au boitier 4 se déplie et le boitier 4 vient exercer un effort de traction suffisant pour éjecter la goupille 23 du conduit 26 et donc de l'ouverture 25 ce qui libère la bande de serrage 21.

L'utilisation de deux goupilles 22, 23 dont une seule, la goupille 23, est mobile permet de limiter l'effort nécessaire pour libérer la bande de serrage 21 et ainsi de limiter les risques de coincement de la goupille 23 par effet de cisaillement et les effets de matage. Cette solution permet également de prévoir un boîtier 4 léger, par exemple en aluminium, peu cher et ne nécessitant pas de traitement de surface pour une introduction en milieu marin. La goupille fixe 22 permet de maintenir une liaison entre le corps 8 et la bande de serrage 21 et ainsi de limiter le risque que la bande de serrage 21 soit projetée, lors de son déploiement, sur un des bras, ce qui pourrait gêner le déploiement des bras ou occasionner des dégâts matériels.

Dans une variante moins avantageuse, les deux extrémités de la bande de serrage 21 sont reliées à une même goupille qui est automatiquement retirée lors de l'immersion de la bouée de sorte à libérer la bande de serrage, les bras et les lames ressort.

En variante, le boîtier 4 est en acier ce qui facilite la libération de la bande de serrage, notamment dans le cas à une goupille.

Dans une variante moins avantageuse, le boîtier 4 constitue les moyens de maintien des bras en configuration repliée et des ressorts de flexion en flexion.

Dans une autre variante, des moyens de maintien distincts sont prévus pour maintenir les bras en configuration repliée et pour maintenir les bras en configuration ouverte. La bande de serrage entoure par exemple uniquement les ressorts et les bras sont maintenus en configuration repliée uniquement par le boîtier.

Comme visible sur la figure 9, le corps 8 présente sensiblement une forme de touret d'axe z comprenant un tube 28 d'axe r disposé entre deux flasques 29, 30 à section en forme de rondelle centrée sur l'axe r et s'étendant perpendiculairement à l'axe r. Les logements 15a, 15b, 15c, 15d, 15e sont ménagés dans le corps 8. Chaque logement comprend une fente radiale ménagée dans chaque flasque. Les deux fentes sont réalisées en regard l'une de l'autre. Les extrémités distales ED des bras comprennent chacune une première partie logée dans les logements. Cette première partie est prolongée par une partie de diamètre plus élevé que le logement perpendiculairement à l'axe r de sorte que les bras puissent s'allonger en retenant le corps 8.

Les ressorts de flexion 14a, 14b, 14c, 14d 14e et la bande de flexion 21 sont logés entre les deux flasques ce qui leur permet d'être retenus à une position sensiblement fixe par rapport au corps 8 selon l'axe r et d'être entraînés par le corps 8 lors de son mouvement selon l'axe r.

Comme visible sur les figures 7 à 9, les parties d'ancrage PA des ressorts de flexion sont fixés au corps 8 uniquement par coopération de forme entre le corps 8 et les ressorts de flexion respectifs. Cela permet de limiter le nombre de pièces et donc la complexité du montage, le volume occupé par le dispositif d'engagement du déploiement ainsi que sa fiabilité.

Sur la réalisation des figures, le corps 8 comprend des fentes 44a, 44b, 44c, 44d, 44e régulièrement espacées autour de l'axe r et traversant le tube 28. La partie d'ancrage PA de chaque ressort est coudée et comprend deux parties inclinées l'une par rapport à l'autre dans le plan perpendiculaire à l'axe z dont une partie radiale PR et une partie tangentielle PT reliée à la partie déformable PD par la partie radiale PR. La partie radiale PR pénètre dans une partie radiale de la fente radiale 44a, 44b, 44c, 44d, 44e réalisée dans le tube et la partie d'ancrage PA se prolonge par la partie tangentielle PT est insérée dans une partie tangentielle de la fente radiale qui vient en appui sur une paroi interne tangentielle de la fente.

En variante, la partie d'ancrage PA comprend uniquement une partie emmanchée dans une ouverture radiale ménagée dans le tambour.

En variante, les moyens d'engagement du mouvement des bras comprennent en outre des moyens de fixation des parties d'ancrage PA des ressorts de flexion au corps 8.

Comme visible sur la figure 6, la bouée comprend des hydrophones 60 montés sur les bras.

La ligne de plongée 6 peut être configurée pour permettre un transfert de données entre le corps flottant 70 le corps 9 lui-même relié électriquement aux hydrophones 60.

La ligne de plongée 6 peut comprendre au moins un câble et éventuellement un amortisseur élastique interposé entre le câble et le corps flottant 70.

Le sonar peut aussi comprendre d'autres éléments, comme par exemple des émetteurs acoustiques 171 attachés à la ligne de plongée 6 comme visible sur la figure 6 initialement logés dans le boîtier 4. L'antenne de réception 111 est interposée entre les émetteurs 171 et le corps flottant 7 sur la ligne 6.

En variante, les moyens d'engagement du déploiement comprennent un unique ressort de flexion configuré et agencé pour engager le déploiement de tous les bras. Les bras se déploient alors consécutivement. La partie déformable PD du ressort de flexion est alors avantageusement enroulée autour de l'axe r sur plus d'un tour. En variante, la partie déformable PD est enroulée sur moins d'un tour ou sur un tour. L'amplitude de déploiement est moindre mais le déploiement de certains bras crée une déstabilisation de la bouée qui permet aux haubans de déployer tous les bras. En variante, plusieurs ressorts de flexion sont prévus. Chaque ressort est configuré et agencé pour engager le déploiement d'un ensemble d'au moins un bras ou de plusieurs bras. Les bras des différents ensembles de bras sont distincts. Autrement dit, le déploiement de chaque bras est engagé par un unique ressort de flexion et chaque ressort de flexion engage le déploiement d'un ou plusieurs bras. En variante, seulement une partie des bras est associée à un ressort de flexion qui va engager son déploiement, par exemple un seul bras.

## Revendications

1. Dispositif sous-marin (1) destiné à être déployé dans l'eau, le dispositif (1) comprenant :
- un ensemble de bras (10a, 10b, 10c, 10d, 10e) articulés à un corps de support (9) présentant un axe de référence r, les bras (10) étant aptes à être maintenus dans une configuration repliée et aptes à se déployer jusqu'à une configuration déployée dans laquelle les bras (10a, 10b, 10c, 10d, 10e) s'étendent autour de l'axe de référence r, les bras (10a, 10b, 10c, 10d, 10e) se déployant par éloignement d'extrémités distales (ED) des bras (10a, 10b, 10c, 10d, 10e) de l'axe r,
- un ensemble d'au moins un ressort de flexion (14a, 14b, 14c, 14d, 14e) sollicité élastiquement en flexion lorsque les bras (10a, 10b, 10c, 10d, 10e) sont maintenus en configuration repliée et apte à se détendre lorsque les bras (10) sont libérés de la configuration repliée, l'ensemble d'au moins un ressort de flexion (14a, 14b, 14c, 14d, 14e) étant configuré et agencé de sorte à exercer sur au moins un des bras (10a, 10b, 10c, 10d, 10e), lorsque les bras (10a, 10b, 10c, 10d, 10e) sont libérés de la configuration repliée, une poussée engageant le déploiement du bras (10a, 10b, 10c, 10d, 10e), **caractérisé en ce que** le ressort en flexion est sollicité globalement en flexion lorsque les bras (10a, 10b, 10c, 10d, 10e) sont maintenus en configuration repliée et travaille globalement en flexion lorsque les bras sont libérés, au moins un dudit au moins un ressort de flexion (14a) comprenant une partie d'ancrage (PA), fixe par rapport à l'axe de référence r, et une partie déformable (PD) qui se déforme lorsque le ressort de flexion (14a) se détend, la partie déformable (PD) étant enroulée autour de l'axe de référence lorsque les bras (10a, 10b, 10c, 10d, 10e) sont maintenus dans la configuration repliée et se déroulant lorsque le ressort (14a) se détend.

2. Dispositif sous-marin (1) selon la revendication précédente, dans lequel le ressort de flexion (14a, 14b, 14c, 14d, 14e) est agencé de sorte à se déformer essentiellement dans un plan perpendiculaire à l'axe de référence lorsqu'il se détend.

3. Dispositif sous-marin (1) selon l'une quelconque des revendications précédentes, dans lequel, les bras (10a, 10b, 10c, 10d, 10e), sont répartis angulairement autour de l'axe de référence r du corps de support (9).

4. Dispositif sous-marin (1) selon l'une quelconque des revendications précédentes, dans lequel, le ressort de flexion (14a) comprend une partie d'ancrage (PA) fixe par rapport à l'axe r et une partie déformable (PD) qui se déforme lorsque le ressort de flexion (14a) se détend, la partie déformable (PD) s'étendant autour de l'axe r, lorsque les bras (10a, 10b, 10c, 10d, 10e) sont maintenus en configuration repliée, sur un secteur angulaire (SA) comprenant un secteur angulaire de référence (SR) délimité par un premier bras (10a) de l'ensemble de bras (10a, 10b, 10c, 10d, 10e) sur lequel le ressort de flexion (14a) exerce une poussée de sorte à engager son déploiement lorsqu'il se détend et par un deuxième bras (10e), de l'ensemble de bras (10a, 10b, 10c, 10d, 10e), adjacent au premier bras (10a).

5. Dispositif sous-marin (1) selon la revendication précédente, dans lequel la partie déformable (PD) s'étend au-delà du secteur angulaire de référence (SR), du côté du deuxième bras (10e).

6. Dispositif sous-marin (1) selon l'une quelconque des revendications précédentes, dans lequel la partie déformable (PD) s'étend au-delà du secteur angulaire de référence (SR), du côté du premier bras (10b).

7. Dispositif sous-marin (1) selon la revendication 1, dans lequel la partie déformable (PD) comprend une extrémité libre (EL), se trouvant au-delà du secteur de référence (SR) dans le sens opposé au deuxième bras (10e) en partant du premier bras.

8. Dispositif sous-marin (1) selon l'une quelconque des revendications précédentes, dans lequel l'ensemble d'au moins un ressort de flexion (14a, 14b, 14c, 14d, 14e), comprend plusieurs ressorts de flexion (14a, 14b, 14c, 14d, 14e), chaque ressort de flexion (14a, 14b, 14c, 14d, 14e)étant configuré et agencé de sorte à engager le déploiement d'un unique bras (10a, 10b, 10c, 10d, 10e).

9. Dispositif sous-marin (1) selon la revendication précédente, dans lequel les ressorts de flexion (14a, 14b, 14c, 14d, 14e) se superposent lorsque les bras (10a, 10b, 10c, 10d, 10e) sont maintenus dans la configuration repliée.

10. Dispositif sous-marin (1) selon l'une quelconque des revendications précédentes, dans lequel l'ensemble d'au moins un ressort de flexion (14a, 14b, 14c, 14d, 14e) est disposé à proximité de l'extrémité distale du bras (10a, 10b, 10c, 10d, 10e) .

11. Dispositif sous-marin (1) selon l'une quelconque des revendications précédentes, comprenant des moyens de maintien (20) aptes à maintenir les bras (10a, 10b, 10c, 10d, 10e) dans la configuration repliés et à les libérer, lesdits moyens de maintien (20) comprennent une bande de serrage flexible (21) mise en flexion élastique pour entourer les bras (10a, 10b, 10c, 10d, 10e) de sorte à les maintenir en configuration repliée, la bande flexible (21) étant maintenue en flexion par deux goupilles (22, 23), la bande flexible (21) étant libérée par entraînement d'une seule des deux goupilles (23) en translation par rapport à la bande flexible selon l'axe de référence.

12. Dispositif sous-marin (1) selon l'une quelconque des revendications précédentes étant une bouée acoustique aérolargable.

13. Dispositif sous-marin selon l'une quelconque des revendications précédentes, dans lequel la poussée engageant le déploiement du bras présente une composante radiale par rapport à l'axe de référence.

## Patentansprüche

1. Unterwasservorrichtung (1), die dafür gedacht ist, im Wasser entfaltet zu werden, wobei die Vorrichtung (1) Folgendes umfasst:
- einen Aufbau von Armen (10a, 10b, 10c, 10d, 10e), die an einem Haltekörper (9) angelenkt sind, der eine Bezugsachse r aufweist, wobei die Arme (10) dafür geeignet sind, in einer eingezogenen Konfiguration gehalten zu werden, und in der Lage sind, sich bis zu einer entfalteten Konfiguration zu entfalten, in der sich die Arme (10a, 10b, 10c, 10d, 10e) um die Bezugsachse r erstrecken, wobei sich die Arme (10a, 10b, 10c, 10d, 10e) durch Entfernung von distalen Enden (ED) der Arme (10a, 10b, 10c, 10d, 10e) von der Achse r entfalten,
- einen Aufbau von mindestens einer Biegefeder (14a, 14b, 14c, 14d, 14e), die elastisch in Biegung vorgespannt ist, wenn die Arme (10a, 10b, 10c, 10d, 10e) in der eingezogenen Konfiguration gehalten sind, und die in der Lage ist, sich zu entspannen, wenn die Arme (10) von der eingezogenen Konfiguration freigegeben sind, wobei der Aufbau von mindestens einer Biegefeder (14a, 14b, 14c, 14d, 14e) so konfiguriert und eingerichtet ist, dass er auf mindestens einen der Arme (10a, 10b, 10c, 10d, 10e), wenn die Arme (10a, 10b, 10c, 10d, 10e) von der eingezogenen Konfiguration freigegeben sind, einen Stoß ausübt, der die Entfaltung der Arme (10a, 10b, 10c, 10d, 10e) veranlasst, **dadurch gekennzeichnet, dass** die Biegefeder insgesamt in Biegung vorgespannt ist, wenn die Arme (10a, 10b, 10c, 10d, 10e) in der eingezogenen Konfiguration gehalten sind, und insgesamt in Biegung arbeitet, wenn die Arme freigegeben sind, wobei mindestens eine der mindestens einen Biegefeder (14a) einen Verankerungsteil (PA), der in Bezug auf die Bezugsachse r feststehend ist, und einen verformbaren Teil (PD) umfasst, der sich verformt, wenn sich die Biegefeder (14a) entspannt, wobei der verformbare Teil (PD) um die Bezugsachse aufgewickelt wird, wenn die Arme (10a, 10b, 10c, 10d, 10e) in der eingezogenen Konfiguration gehalten sind, und abgewickelt wird, wenn sich die Feder (14a) entspannt.

2. Unterwasservorrichtung (1) nach dem vorhergehenden Anspruch, wobei die Biegefeder (14a, 14b, 14c, 14d, 14e) so eingerichtet ist, dass sie sich im Wesentlichen in einer Ebene senkrecht zu der Bezugsachse verformt, wenn sie sich entspannt.

3. Unterwasservorrichtung (1) nach einem der vorhergehenden Ansprüche, wobei die Arme (10a, 10b, 10c, 10d, 10e) winkelig um die Bezugsachse r des Haltekörpers (9) verteilt sind.

4. Unterwasservorrichtung (1) nach einem der vorhergehenden Ansprüche, wobei die Biegefeder (14a) einen Verankerungsteil (PA), der in Bezug auf die Bezugsachse r feststehend ist, und einen verformbaren Teil (PD) umfasst, der sich verformt, wenn sich die Biegefeder (14a) entspannt, wobei sich der verformbare Teil (PD), wenn die Arme (10a, 10b, 10c, 10d, 10e) in der eingezogenen Konfiguration gehalten sind, um die Achse r auf einem winkeligen Sektor (SA) erstreckt, der einen winkeligen Bezugssektor (SR) umfasst, der durch einen ersten Arm (10a) des Aufbaus von Armen (10a, 10b, 10c, 10d, 10e), auf den die Biegefeder (14a) einen Stoß ausübt, um seine Entfaltung zu veranlassen, wenn sie sich entspannt, und durch einen zweiten Arm (10e) des Aufbaus von Armen (10a, 10b, 10c, 10d, 10e) angrenzend an den ersten Arm (10a) begrenzt ist.

5. Unterwasservorrichtung (1) nach dem vorhergehenden Anspruch, wobei sich der verformbare Teil (PD) über den winkeligen Bezugssektor (SR) auf der Seite des zweitens Arms (10e) hinaus erstreckt.

6. Unterwasservorrichtung (1) nach einem der vorhergehenden Ansprüche, wobei sich der verformbare Teil (PD) über den winkeligen Bezugssektor (SR) auf der Seite des ersten Arms (10b) hinaus erstreckt.

7. Unterwasservorrichtung (1) nach Anspruch 1, wobei der verformbare Teil (PD) ein freies Ende (EL) umfasst, das sich über den Bezugssektor (SR) in der dem zweiten Arm (10e) entgegengesetzten Richtung, ausgehend vom ersten Arm, hinaus befindet.

8. Unterwasservorrichtung (1) nach einem der vorhergehenden Ansprüche, wobei der Aufbau aus mindestens einer Biegefeder (14a, 14b, 14c, 14d, 14e) mehrere Biegefedern (14a, 14b, 14c, 14d, 14e) umfasst, wobei jede Biegefeder (14a, 14b, 14c, 14d, 14e) dafür konfiguriert und eingerichtet ist, dass sie die Entfaltung eines einzelnen Arms (10a, 10b, 10c, 10d, 10e) veranlasst.

9. Unterwasservorrichtung (1) nach dem vorhergehenden Anspruch, wobei die Biegefedern (14a, 14b, 14c, 14d, 14e) einander überlagern, wenn die Arme (10a, 10b, 10c, 10d, 10e) in der eingezogenen Konfiguration gehalten sind.

10. Unterwasservorrichtung (1) nach einem der vorhergehenden Ansprüche, wobei der Aufbau aus mindestens einer Biegefeder (14a, 14b, 14c, 14d, 14e) in der Nähe des distalen Endes des Arms (10a, 10b, 10c, 10d, 10e) angeordnet ist.

11. Unterwasservorrichtung (1) nach einem der vorhergehenden Ansprüche, umfassend Haltemittel (20), die dafür geeignet sind, die Arme (10a, 10b, 10c, 10d, 10e) in der eingezogenen Konfiguration zu halten und sie freizugeben, wobei die Haltemittel (20) ein flexibles Befestigungsband (21) umfassen, das in elastische Biegung gebracht ist, um die Arme (10a, 10b, 10c, 10d, 10e) so zu umgeben, dass sie in der eingezogenen Konfiguration gehalten werden, wobei das flexible Band (21) durch zwei Stifte (22, 23) in Biegung gehalten wird, wobei das flexible Band (21) durch Antreiben einen einzigen der zwei Stifte (23) zu einer Translationsbewegung in Bezug auf das flexible Band entlang der Bezugsachse freigegeben wird.

12. Unterwasservorrichtung (1) nach einem der vorhergehenden Ansprüche, die eine durch Luft abwerfbare Sonoboje ist.

13. Unterwasservorrichtung nach einem der vorhergehenden Ansprüche, wobei der Stoß, der die Entfaltung des Arms veranlasst, eine radiale Komponente in Bezug auf die Bezugsachse aufweist.

## Claims

1. An underwater device (1) which is intended to be deployed in water, the device (1) comprising:
- an assembly of arms (10a, 10b, 10c, 10d, 10e) which are articulated to a support body (9) which has a reference axis r, the arms (10) being capable of being held in a folded configuration and being capable of being deployed as far as a deployed configuration in which the arms (10a, 10b, 10c, 10d, 10e) extend around the reference axis r, the arms (10a, 10b, 10c, 10d, 10e) being deployed by means of distal ends (ED) of the arms (10a, 10b, 10c, 10d, 10e) being moved away from the axis r,
- an assembly of at least one flexion spring (14a, 14b, 14c, 14d, 14e) which is resiliently biased in flexion when the arms (10a, 10b, 10c, 10d, 10e) are held in the folded configuration and which is capable of relaxing when the arms (10) are released from the folded configuration, the assembly of at least one flexion spring (14a, 14b, 14c, 14d, 14e) being configured and arranged so as to apply to at least one of the arms (10a, 10b, 10c, 10d, 10e), when the arms (10a, 10b, 10c, 10d, 10e) are released from the folded configuration, a thrust which causes the deployment of the arm (10a, 10b, 10c, 10d, 10e), **characterised in that** the flexion spring is generally biased in flexion when the arms (10a, 10b, 10c, 10d, 10e) are held in the folded configuration and generally works in flexion when the arms are released, at least one of the at least one flexion spring (14a) comprising an anchoring portion (PA) which is fixed relative to the reference axis r, and a deformable portion (PD) which becomes deformed when the flexion spring (14a) relaxes, the deformable portion (PD) being wound around the reference axis when the arms (10a, 10b, 10c, 10d, 10e) are held in the folded configuration and being unwound when the spring (14a) relaxes.

2. The underwater device (1) according to the preceding claim, wherein the flexion spring (14a, 14b, 14c, 14d, 14e) is arranged so as to be deformed substantially in a plane perpendicular to the reference axis when it relaxes.

3. The underwater device (1) according to any one of the preceding claims, wherein the arms (10a, 10b, 10c, 10d, 10e) are distributed angularly about the reference axis r of the support member (9).

4. The underwater device (1) according to any one of the preceding claims, wherein the flexion spring (14a) comprises an anchoring portion (PA) which is fixed relative to the axis r and a deformable portion (PD) which is deformed when the flexion spring (14a) relaxes, the deformable portion (PD) extending about the axis r, when the arms (10a, 10b, 10c, 10d, 10e) are held in the folded configuration, over an angular sector (SA) which comprises a reference angular sector (SR) which is delimited by a first arm (10a) of the assembly of arms (10a, 10b, 10c, 10d, 10e) to which the flexion spring (14a) applies a thrust in order to cause the deployment thereof when it relaxes and by a second arm (10e) of the assembly of arms (10a, 10b, 10c, 10d, 10e) adjacent to the first arm (10a).

5. The underwater device (1) according to the preceding claim, wherein the deformable portion (PD) extends beyond the reference angular sector (SR), at the side of the second arm (10e).

6. The underwater device (1) according to any one of the preceding claims, wherein the deformable portion (PD) extends beyond the reference angular sector (SR), at the side of the first arm (10b).

7. The underwater device (1) according to claim 1, wherein the deformable portion (PD) comprises a free end (EL) which is located beyond the reference sector (SR) in the opposite direction to the second arm (10e) starting from the first arm.

8. The underwater device (1) according to any one of the preceding claims, wherein the assembly of at least one flexion spring (14a, 14b, 14c, 14d, 14e) comprises multiple flexion springs (14a, 14b, 14c, 14d, 14e), each flexion spring (14a, 14b, 14c, 14d, 14e) being configured and arranged so as to cause the deployment of a single arm (10a, 10b, 10c, 10d, 10e).

9. The underwater device (1) according to the preceding claim, wherein the flexion springs (14a, 14b, 14c, 14d, 14e) are superimposed when the arms (10a, 10b, 10c, 10d, 10e) are held in the folded configuration.

10. The underwater device (1) according to any one of the preceding claims, wherein the assembly of at least one flexion spring (14a, 14b, 14c, 14d, 14e) is arranged close to the distal end of the arm (10a, 10b, 10c, 10d, 10e).

11. The underwater device (1) according to any one of the preceding claims, comprising retention means (20) which are capable of holding the arms (10a, 10b, 10c, 10d, 10e) in the folded configuration and of releasing them, the retention means (20) comprising a flexible clamping strip (21) which is placed under resilient flexion to surround the arms (10a, 10b, 10c, 10d, 10e) so as to hold them in the folded configuration, the flexible strip (21) being held in flexion by two pins (22, 23), the flexible strip (21) being released by driving only one of the two pins (23) in translation relative to the flexible strip along the reference axis.

12. The underwater device (1) according to any one of the preceding claims being an air-droppable sonobuoy.

13. The underwater device according to any one of the preceding claims, wherein the thrust which causes the deployment of the arm has a radial component relative to the reference axis.
